# FASCICULE DE BREVET EUROPEEN

(11) **EP 4 109 183 B1**
(45) Date de publication et mention de la délivrance du brevet: **14.02.2024**
(21) Numéro de dépôt: 21181673.1
(22) Date de dépôt: 25.06.2021
(51) Int. Cl.: G04C 17/00, G04B 47/04

(54) **PIÈCE D'HORLOGERIE COMBINANT DES AIGUILLES D'AFFICHAGE ET UN ECRAN D'AFFICHAGE NUMÉRIQUE**
UHR MIT EINER KOMBINATION AUS ANZEIGEZEIGERN UND EINEM DIGITALEN BILDSCHIRM
TIMEPIECE COMBINING DISPLAY HANDS AND A DIGITAL DISPLAY SCREEN

(43) Date de publication de la demande: 28.12.2022
(73) Titulaire: ETA SA Manufacture Horlogère Suisse, 2540 Grenchen (CH)
(72) Inventeur: FLEURY, Emmanuel, 2740 Moutier (CH)
(74) Mandataire: ICB SA

(56) Documents cités:
- JP-A- 2013 044 753
- US-A1- 2017 261 934
- US-B1- 6 661 743

## Description

### Domaine technique de l'invention

L'invention concerne les pièces d'horlogerie combinant un affichage analogique à aiguilles et un affichage numérique.

### Arrière-plan technologique

Depuis quelques années déjà, des montres intègrent en combinaison un affichage analogique basé sur des aiguilles et un affichage numérique, typiquement basé sur un écran à cristaux liquides. Les aiguilles sont typiquement utilisées pour indiquer l'heure à l'utilisateur par leur position par rapport au cadran de la montre. Une telle configuration permet à la fois de conserver la clarté et le côté traditionnel d'un affichage analogique, et la richesse des informations affichables avec un écran à cristaux liquides.

Cependant, un des inconvénients majeurs d'une telle combinaison est d'offrir une configuration d'affichage d'informations qui n'est pas adaptée à une lecture quotidienne et fréquente de ces dernières par le porteur de la montre au risque d'engendrer rapidement chez lui une fatigue visuelle voire des problèmes de vision.

US 2017/261934 A1 décrit une montre fonctionnant selon deux modes de fonctionnement, un mode horaire et un mode timer. L'affichage comprend un écran LCD en plus des aiguilles.

### Résumé de l'invention

Dans ce dessein, l'invention concerne un pièce d'horlogerie, comprenant :
- un boîtier dans lequel un volume d'accueil est ménagé ;
- des aiguilles d'affichage montées pivotantes dans le volume d'accueil ;
- un mouvement, configuré pour entraîner les aiguilles d'affichage en rotation, un tour complet des aiguilles d'affichage définissant une surface de balayage ;
- un écran d'affichage positionné dans le volume d'accueil en dessous du niveau des aiguilles d'affichage, une première partie de la surface de balayage se superposant audit écran d'affichage et une deuxième partie de la surface de balayage ne se superposant pas audit écran d'affichage ;
- un circuit de commande configuré pour basculer séquentiellement entre des premier et deuxième modes de fonctionnement, avec :
   ∘ un premier mode de fonctionnement dans lequel le circuit de commande commande l'entrainement des aiguilles d'affichage dans les première et deuxième parties de la surface de balayage afin d'afficher une information chronométrique ;
   ∘ un deuxième mode de fonctionnement dans lequel le circuit de commande commande l'entrainement des aiguilles d'affichage uniquement dans la deuxième partie de la surface de balayage afin d'afficher une information chronométrique et dans lequel le circuit de commande commande l'affichage d'une information par l'écran d'affichage.
Dans d'autres modes de réalisation :
- la pièce comprend un commutateur susceptible d'être sollicité depuis l'extérieur du boîtier et associé au circuit de commande de façon à déclencher une commutation entre les premier et deuxième modes de fonctionnement ;
- le circuit de commande est configuré pour basculer automatiquement du premier vers le deuxième mode d'affichage dès qu'il commande un affichage sur ledit écran d'affichage ;
- les première et deuxième parties de la surface de balayage sont des demi-disques ;
- le circuit de commande superpose les aiguilles d'affichage et les entraine en rotation de façon à afficher une information chronométrique dans ledit deuxième mode de fonctionnement ;
- l'information chronométrique affichée est de type heure, compte-à-rebours ou chronographe ;
- la pièce comprend en outre un cadran séparant les aiguilles d'affichage du circuit de commande, le cadran étant muni d'index d'affichage horaire ;
- le cadran comporte une première série d'index et une deuxième série d'index correspondant à des informations chronométriques respectives pour les premier et deuxième modes de fonctionnement ;
- l'écran comporte une partie périphérique ceinturant la surface de balayage, le circuit de commande étant configuré pour afficher des index différents sur la partie périphérique en fonction du premier ou du deuxième mode de fonctionnement.

### Brève description des figures

Les buts, avantages et caractéristiques de l'invention ressortiront plus clairement à la lecture de la description qui suit, en référence aux figures dans lesquelles :
- la figure 1 est une vue de dessus d'un exemple de montre pour laquelle l'invention est mise en oeuvre ;
- la figure 2 est une vue de dessus de la montre de la figure 1 dans un premier mode d'affichage ;
- la figure 3 est une vue de dessus de la montre de la figure 1 dans un deuxième mode d'affichage ;
- la figure 4 est une vue de dessus de la montre de la figure 1 dans une variante du deuxième mode d'affichage ;
- la figure 5 est une vue de dessus de la montre de la figure 1 dans une autre variante du deuxième mode d'affichage ;
- la figure 6 est une vue de dessus d'une variante de la montre de la figure 5 dans une variante du deuxième mode d'affichage ;
- les figures 7 à 9 sont des vues de dessus d'une autre variante de la montre avec différents modes d'affichage.

### Description détaillée de l'invention

Dans la suite de la description, les termes "haut", "bas", "supérieur", "inférieur", "au-dessus" "au-dessous" sont à considérer en tenant compte d'un plan médian horizontal parallèle au plan d'appui horizontal du boîtier de la montre sur une surface.

Les termes "extérieur", "externe", "intérieur" et "interne" sont à comprendre en tenant compte d'un axe médian orienté perpendiculairement à un plan médian. Le plan médian est généralement défini par un cadran de la montre, l'axe médian étant généralement défini par l'axe de rotation des aiguilles d'affichage de la montre.

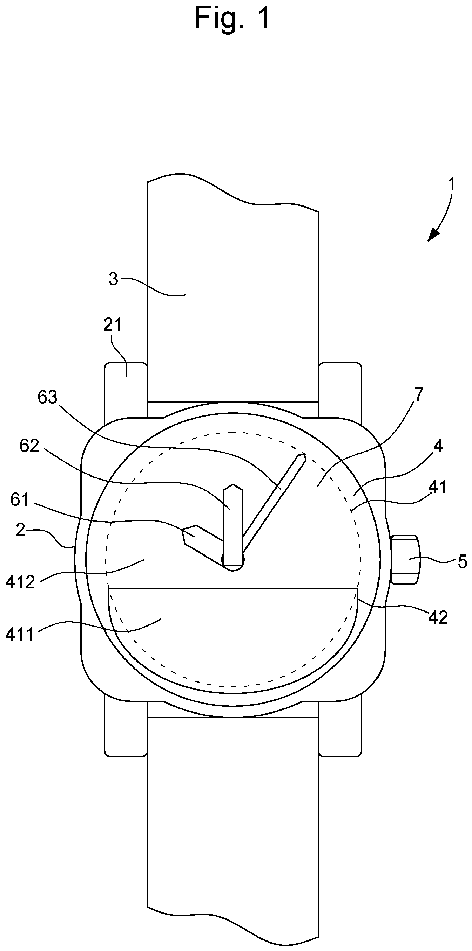

La figure 1 montre une représentation schématique d'une montre 1 en vue de dessus, pour laquelle l'invention est susceptible d'être mise en oeuvre. La montre 1 comporte un boîtier 2 muni d'une carrure. La montre 1 comporte ici un bracelet 3 fixé au boîtier 2. À cet effet, la montre 1 comporte de part et d'autre de sa carrure, deux cornes 21 agencées chacune pour fixer un brin distinct du bracelet 3. La montre 1 comporte ici un élément de commande 5 qui peut être utilisé comme un commutateur ainsi qu'on le verra par la suite. Un tel élément de commande 5 peut être aussi appelé « élément de commutation » et peut de préférence comprendre un unique élément mobile, et par exemple être formé par tout composant adapté à cet effet, tel qu'une lunette tournante, un bouton poussoir, une surface tactile du boitier ou de la glace, etc... Préférentiellement encore, cet élément de commande 5 correspond à une couronne, par exemple à poussoir, formant une couronne de mise à l'heure.

Le boîtier 2 de la montre 1 comporte un volume d'accueil 4 défini par la carrure (généralement réalisée en matériau métallique) et délimité entre un cadran 7 et une glace transparente (non référencée). Le volume d'accueil 4 de la montre 1 est ainsi fermé par le haut par la glace (par exemple en verre saphir). La glace peut être supportée de façon connue en soit par la carrure et fixée de manière étanche à celle-ci par un procédé adapté. Le cadran 7 peut avantageusement comporter des index numériques ou graphiques 71, non représentés sur la figure 1 en vue de clarifier l'illustration.

La montre 1 comporte en outre des aiguilles d'affichage 61 à 63 logées dans le volume d'accueil 4. Les aiguilles 61 à 63 sont entraînées en rotation par un mouvement d'horlogerie non illustré, en vue notamment d'afficher l'heure. Le mouvement d'horlogerie est ici séparé des aiguilles 61 à 63 par le cadran 7. On peut ici distinguer une aiguille 61 destinée à indiquer les heures, une aiguille 62 destinée à indiquer les minutes, et une aiguille 63 destinée à indiquer les secondes. On peut bien entendu prévoir un nombre différent d'aiguilles d'affichage. Les aiguilles 61 à 63 sont ici montées à rotation autour du même axe médian. Ce cadran 7 comprend une surface 41 correspondant à une surface balayée par les aiguilles 61 et 63 sur un tour. L'aiguille 63 étant la plus longue, la surface balayée 41 est ici définie par la longueur de cette aiguille 63. Autrement dit, l'extrémité de cette aiguille 63 définie le contour/la délimitation de cette surface 41 sur le cadran 7.

Le cadran 7 comporte un écran d'affichage numérique 42, ici dans sa partie inférieure. L'écran d'affichage 42 est ainsi présent dans le volume d'accueil 4 et positionné en dessous du niveau des aiguilles 61 à 63. La surface de balayage 41 peut se décomposer en une première partie 411 qui se superpose à l'écran d'affichage 42, et une deuxième partie 412 qui ne se superpose pas à l'écran d'affichage 42. La superposition de la surface de balayage 41 avec l'écran 42 est déterminée par sa projection selon l'axe de rotation des aiguilles 61 à 63. Les première et deuxième parties 411 et 412 ne sont ici pas de taille égale. On notera dans une variante de l'invention, ces première et deuxième parties 411 et 412 pourrait être de de taille sensiblement égale ou égale.

La montre 1 comporte un circuit de commande. Le circuit de commande est avantageusement logé dans le boîtier 2, typiquement sous le cadran 7. Selon l'invention, le circuit de commande est configuré pour présenter des premier et deuxième modes de fonctionnement et pour basculer séquentiellement entre eux.

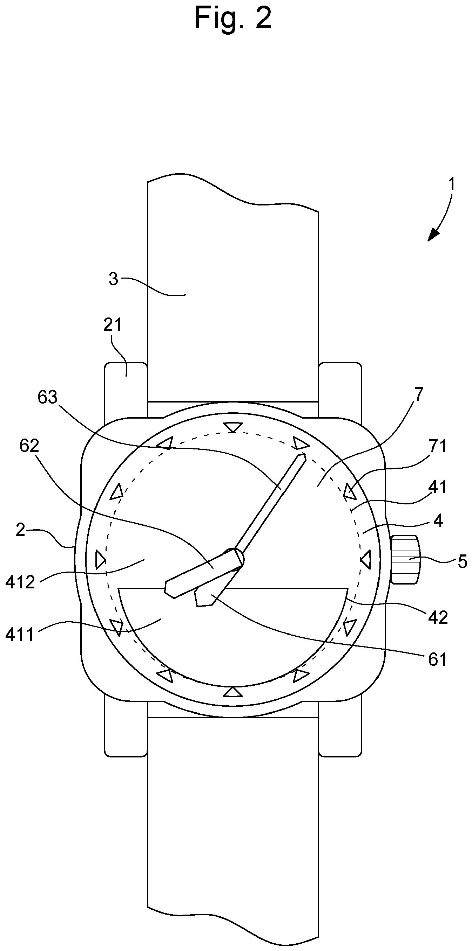

La figure 2 illustre la montre 1 de la figure 1 dans le premier mode de fonctionnement du circuit de commande. Dans ce premier mode de fonctionnement, le circuit de commande commande/contrôle le mouvement horloger pour entraîner les aiguilles d'affichage 61, 62, 63 dans les première et deuxième parties 411 et 412 de la surface de balayage 41 afin d'afficher une information chronométrique. Ainsi, dans la configuration illustrée, les aiguilles 61 et 62 sont dans la première partie 411 et se superposent donc avec l'écran d'affichage 42. L'aiguille 63 est dans la partie 412. Les indexes 71 du cadran 7 favorisent l'identification de l'indication chronométrique par les aiguilles 61 à 63. L'indication chronométrique est ici l'indication horaire de façon connue en soit. L'indication chronométrique peut également être du type compte-à-rebours ou chronographe de façon connue en soi. Dans l'exemple illustré ici, le circuit de commande ne commande l'affichage d'aucune information sur l'écran d'affichage 42. Dans ce premier mode de fonctionnement, l'affichage d'une information chronométrique par les aiguilles 61 à 63 utilise toute la surface de balayage 41 et optimise donc l'affichage analogique pour un maximum de visibilité pour l'utilisateur.

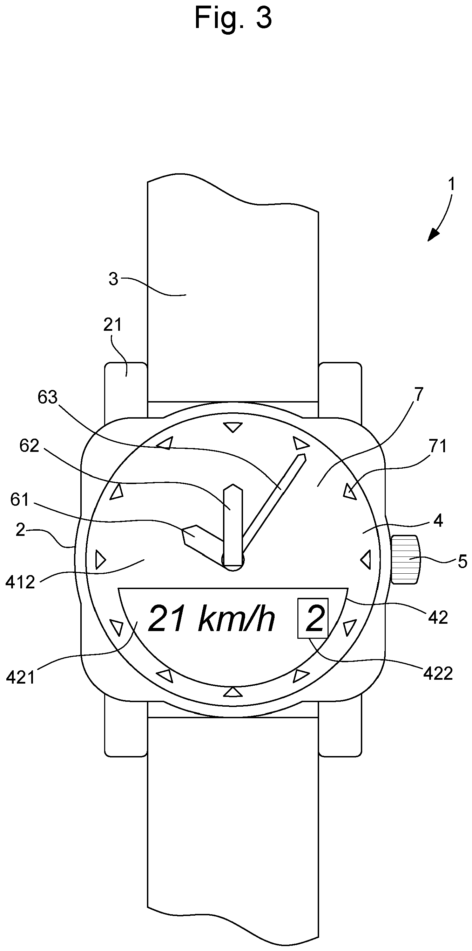

La figure 3 illustre la montre de la figure 1 dans un exemple de deuxième mode de fonctionnement du circuit de commande. Dans ce deuxième mode de fonctionnement, le circuit de commande commande/contrôle l'affichage d'une information par l'écran d'affichage 42. L'information affichée par l'écran 42 peut être de tout type : par exemple une information provenant de l'extérieur dans le cas d'une montre connectée, une information chronologique, ou une information de vitesse instantanée, de distance parcourue ou de position pour une montre ayant des fonctionnalités de géolocalisation. La montre 1 peut comprendre un circuit de communication sans fil, afin de pouvoir connecter ladite montre avec l'extérieur et disposer ainsi d'informations provenant de l'extérieur en vue de les afficher sur l'écran 42.

Dans l'exemple illustré à la figure 3, l'écran 42 comporte une zone d'affichage principale 421 et une zone d'affichage secondaire 422. Dans cet exemple, l'écran 42 affiche une information de vitesse dans sa zone principale 421 et indique dans la zone d'affichage secondaire 422 la catégorie de l'information affichée dans la zone principale. La zone d'affichage secondaire 422 peut également indiquer la nature de l'information chronométrique affichée par les aiguilles 61 à 63 (indication d'heure, compte à rebours, chronographe...).

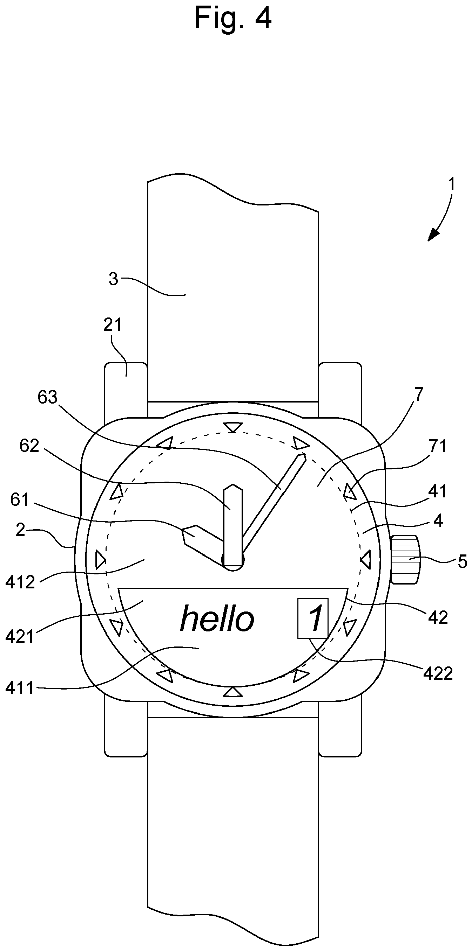

Dans l'exemple illustré à la figure 4, la zone d'affichage principale 421 affiche un message et la zone d'affichage secondaire 422 précise la catégorie d'information affichée dans la zone d'affichage principale 421.

Ainsi que nous l'avons précédemment évoqué, l'élément de commande 5 peut être utilisé comme commutateur pour afficher séquentiellement différentes catégories d'information dans la zone d'affichage principale 421 de l'écran 42. La commutation entre les deux modes de fonctionnement peut également être basée sur la détection de mouvements du poignet de l'utilisateur, par exemple si la montre 1 inclut des capteurs du type gyroscope/accéléromètre.

Dans ce deuxième mode de fonctionnement, le mouvement horloger est configuré pour entrainer les aiguilles d'affichage 61, 62, 63 seulement dans la deuxième partie 412 de la surface de balayage 41 afin d'afficher une information chronométrique. Ainsi, les aiguilles 61 à 63 peuvent encore être utilisées pour afficher une information chronométrique, sans pour autant altérer la vision de l'écran d'affichage 42 puisque les aiguilles 61 à 63 ne sont pas disposées dans la première partie 411. Dans cet exemple, l'information chronométrique peut être une indication d'heure, un compte à rebours ou un chronographe. Une échelle de 12 heures est ici définie par la partie supérieure du cadran 7. L'index le plus à droite, localisé ici sur la figure 4 à proximité de la couronne 5, correspond à une valeur nulle. Un tel index correspond le cas échéant à 12 heures, 60 minutes ou 60 secondes en fonction de l'aiguille d'affichage 61 à 63 considérée. Ainsi, seuls les index supérieurs du cadran 7 définissent ici l'affichage horaire. Dans l'exemple illustré sur la figure 4, les aiguilles 61 à 63 indiquent qu'il est deux heures, zéro minute et 41 secondes (ou qu'il reste ce temps pour un mode compte à rebours, ou que ce temps s'est écoulé pour un mode chronographe).

L'élément de commande 5 peut être utilisé comme commutateur pour basculer entre les premier et deuxième modes d'affichage. On peut également envisager que la commutation entre les premier et deuxième modes d'affichage soit commandée par une communication avec l'extérieur, par exemple dans le cas d'une montre connectée. La commutation vers le deuxième mode de fonctionnement peut par exemple intervenir à réception d'un nouveau message pour une montre connectée. On peut également prévoir que le circuit de commande bascule vers le deuxième mode de fonctionnement dès qu'il affiche une information sur l'écran d'affichage 42. On peut également prévoir qu'une commutation entre les premier et deuxième modes de fonctionnement intervienne après une temporisation, par exemple après que l'utilisateur a commandé une commutation initiale (par exemple en requérant le premier mode de fonctionnement pour visionner précisément l'heure) par l'intermédiaire du bouton 5.

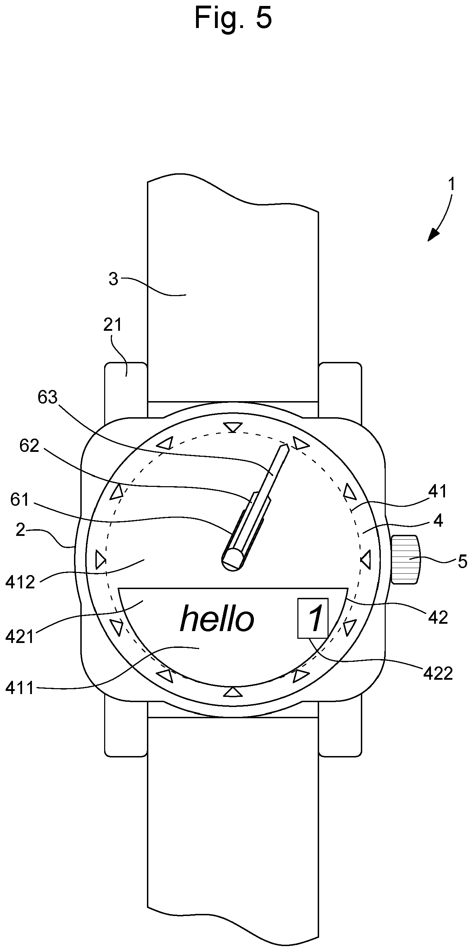

La figure 5 illustre la montre 1 de la figure 1 dans un autre exemple de deuxième mode de fonctionnement du circuit de commande. Le circuit de commande commande également le mouvement horloger pour entraîner les aiguilles d'affichage 61, 62, 63 seulement dans la deuxième partie 412 de la surface de balayage 41 afin d'afficher une information chronométrique. Ainsi, les aiguilles 61 à 63 peuvent encore être utilisées pour afficher une information chronométrique, sans pour autant altérer la vision de l'écran d'affichage 42 puisque les aiguilles 61 à 63 ne sont pas disposées dans la première partie 411. Les aiguilles 61 à 63 sont ici superposées, afin de favoriser une lecture rapide de l'information chronométrique limitée à la partie 412. Dans ce mode d'affichage, le circuit de commande entraine donc les aiguilles 61 à 63 en superposition. Dans l'exemple illustré à la figure 5, l'information chronométrique affichée par les aiguilles 61 à 63 est six heures, trente-six minutes et trente-six secondes.

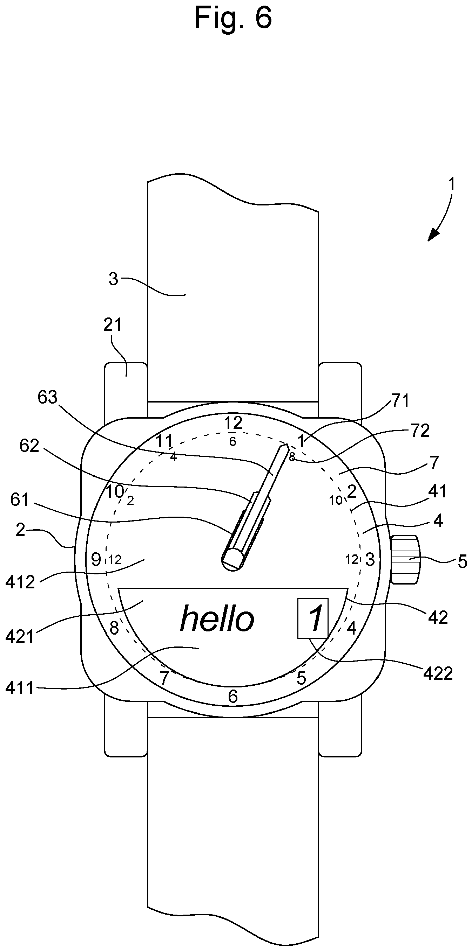

La figure 6 illustre une variante de la montre 1 de la figure 1 dans l'exemple d'un deuxième mode de fonctionnement du circuit de commande correspondant à la figure 5. Le circuit de commande commande également le mouvement horloger pour entrainer les aiguilles d'affichage 61, 62, 63 seulement dans la deuxième partie 412 de la surface de balayage 41 afin d'afficher une information chronométrique. Ainsi, les aiguilles 61 à 63 peuvent encore être utilisées pour afficher une information chronométrique, sans pour autant altérer la vision de l'écran d'affichage 42 puisque les aiguilles 61 à 63 ne sont pas disposées dans la première partie 411. Les aiguilles 61 à 63 sont ici superposées, afin de favoriser une lecture rapide de l'information chronométrique limitée à la partie 412. Dans ce mode d'affichage, le circuit de commande entraine également les aiguilles 61 à 63 en superposition. Afin de faciliter la lecture de l'heure dans ce deuxième mode de fonctionnement, le cadran 7 comporte une première série d'index 71 pour la lecture d'une information chronométrique dans le premier mode de fonctionnement, et une deuxième série d'index 72 pour la lecture d'une information chronométrique dans le deuxième mode de fonctionnement.

Afin de permettre aux aiguilles 61 à 63 de revenir à leur position initiale après avoir atteint la fin de la deuxième partie d'affichage 412 dans le deuxième mode de fonctionnement (par exemple lorsqu'une aiguille atteint l'index 71 identifié par '3' à la figure 6), la montre 1 comporte un affichage rétrograde. Cet affichage rétrograde permet d'éviter aux aiguilles 61 à 63 de se superposer à la première partie d'affichage 411 durant le deuxième mode de fonctionnement. Autrement dit, le circuit de commande peut commander une rotation rapide des aiguilles 61 à 63 jusqu'au début de la deuxième partie d'affichage 412 (par exemple jusqu'à l'index 71 identifié par '9' à la figure 6), en sens rétrograde, dans l'optique d'éviter la superposition de cette première partie 411 par les aiguilles 61 à 63. Un tel affichage rétrograde peut être mis en oeuvre au moyen d'un mouvement comportant un ou plusieurs moteurs bidirectionnels. Selon l'autre alternative, lorsque les aiguilles 61 à 63 atteignent la fin de la deuxième partie d'affichage 412 dans le deuxième mode de fonctionnement, le circuit de commande peut commander une rotation rapide des aiguilles 61 à 63 en sens horaire jusqu'au début de la deuxième partie d'affichage 412 (par exemple jusqu'à l'index 71 identifié par '9' à la figure 6). Ainsi, les aiguilles 61 à 63 ne se superposent que furtivement à la première partie 411 dans ce deuxième mode de fonctionnement..

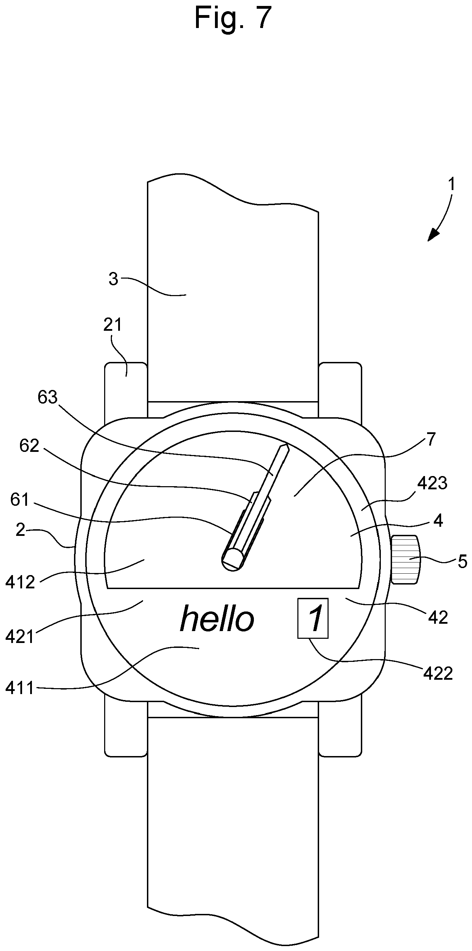

La figure 7 illustre une variante d'une montre 1 selon l'invention. Dans cet exemple, l'écran 42 comporte une partie périphérique 423, qui ceinture la deuxième partie 412 ainsi que la zone d'affichage principale 421. Cette partie périphérique 423 peut également appartenir à la première partie 411, les aiguilles 61 à 63 pouvant s'y superposer. La partie périphérique 423 peut être pilotée par le circuit de commande pour permettre l'affichage d'index dynamiques, différents en fonction du premier ou du deuxième mode de fonctionnement. L'écran 42 peut être mis en oeuvre sous la forme d'un afficheur matriciel.

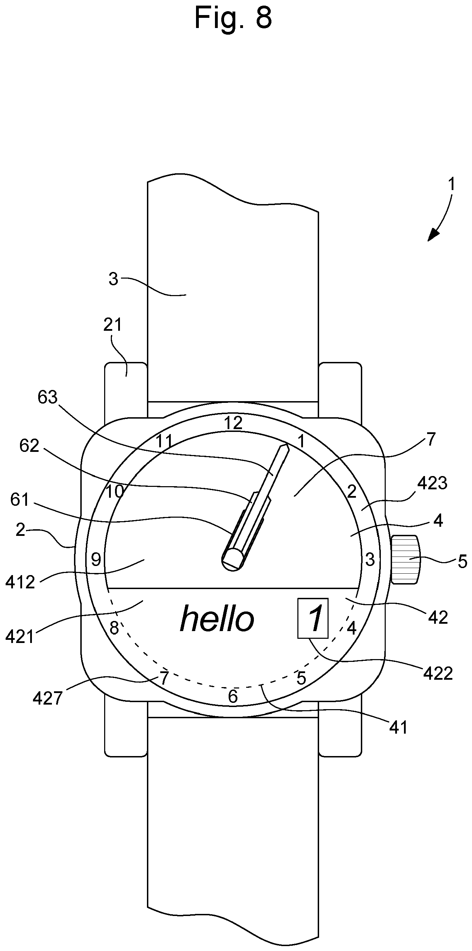

Dans l'exemple de la figure 8, la montre 1 est dans son premier mode de fonctionnement. La partie périphérique 423 affiche ainsi des index 427 ceinturant la surface de balayage 41 des aiguilles 61 à 63. Les index 427 affichés ici favorisent la lecture de l'heure dans ce premier mode de fonctionnement, puisqu'ils sont affichés en remplacement et non en juxtaposition avec des index du deuxième mode de fonctionnement.

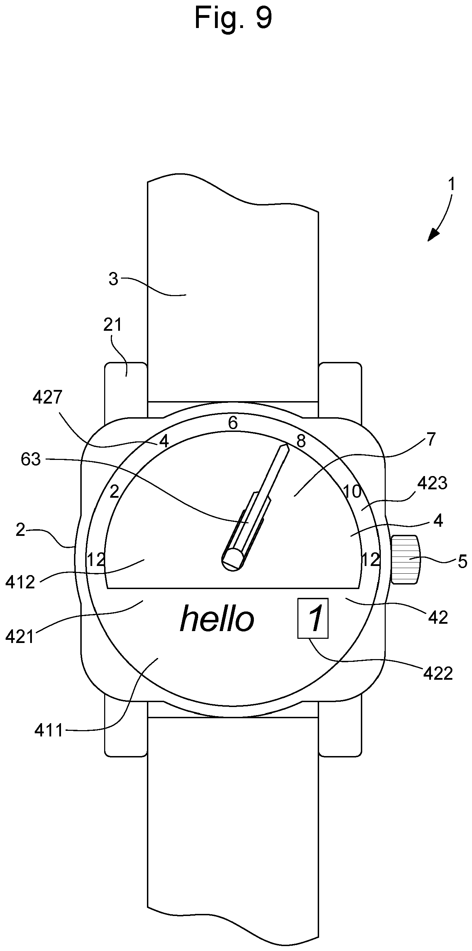

Dans l'exemple de la figure 9, la montre 1 est dans son deuxième mode de fonctionnement. La partie périphérique 423 affiche ainsi des index 427 ceinturant uniquement la partie 412. Les indexes 427 affichés ici favorisent la lecture de l'heure dans ce deuxième mode de fonctionnement, puisqu'ils sont affichés en remplacement et non en juxtaposition avec des index du premier mode de fonctionnement. De plus, les indexes 427 correspondent précisément au mode de lecture de l'information chronométrique du deuxième mode de fonctionnement.

On peut également envisager que les première et deuxième parties 411 et 412 forment des demi-disques, de sorte que l'affichage dans le deuxième mode de fonctionnement pourra être considéré comme un affichage en demi-lunes. L'invention peut bien entendu s'appliquer à d'autres types de pièces d'horlogerie qu'une montre telle qu'illustrée.

## Revendications

1. Pièce d'horlogerie (1), **caractérisée en ce qu'**elle comprend:
- un boîtier (2) dans lequel un volume d'accueil (4) est ménagé ;
- des aiguilles d'affichage (61, 62, 63) montées pivotantes dans le volume d'accueil (4) ;
- un mouvement, configuré pour entraîner les aiguilles d'affichage en rotation, un tour complet des aiguilles d'affichage définissant une surface de balayage (41) ;
- un écran d'affichage (42) positionné dans le volume d'accueil (4) en dessous du niveau des aiguilles d'affichage, une première partie (411) de la surface de balayage se superposant audit écran d'affichage (42) et une deuxième partie (412) de la surface de balayage ne se superposant pas audit écran d'affichage ;
**caractérise en ce que** le pièce d'horlogerie comprend en outre H
- un circuit de commande configuré pour basculer séquentiellement entre des premier et deuxième modes de fonctionnement, avec :
∘ un premier mode de fonctionnement dans lequel le circuit de commande commande l'entrainement des aiguilles d'affichage (61, 62, 63) dans les première et deuxième parties de la surface de balayage afin d'afficher une information chronométrique ;
∘ un deuxième mode de fonctionnement dans lequel le circuit de commande commande l'entrainement des aiguilles d'affichage (61, 62, 63) uniquement dans la deuxième partie de la surface de balayage afin d'afficher une information chronométrique et dans lequel le circuit de commande commande l'affichage d'une information par l'écran d'affichage.

2. Pièce d'horlogerie (1) selon la revendication 1, **caractérisée en ce qu'**elle comprend en outre un commutateur (5) susceptible d'être sollicité depuis l'extérieur du boîtier (2) et associé au circuit de commande de façon à déclencher une commutation entre les premier et deuxième modes de fonctionnement.

3. Pièce d'horlogerie (1) selon la revendication 1 ou 2, **caractérisée en ce que** le circuit de commande est configuré pour basculer automatiquement du premier vers le deuxième mode d'affichage dès qu'il commande un affichage sur ledit écran d'affichage (42).

4. Pièce d'horlogerie (1) selon l'une quelconque des revendications précédentes, **caractérisée en ce que** les première et deuxième parties (411, 412) de la surface de balayage sont des demi-disques.

5. Pièce d'horlogerie (1) selon l'une quelconque des revendications précédentes, **caractérisée en ce que** le circuit de commande superpose les aiguilles d'affichage et les entraine en rotation de façon à afficher une information chronométrique dans ledit deuxième mode de fonctionnement.

6. Pièce d'horlogerie (1) selon l'une quelconque des revendications précédentes, **caractérisée en ce que** l'information chronométrique affichée est de type heure, compte-à-rebours ou chronographe.

7. Pièce d'horlogerie (1) selon l'une quelconque des revendications précédentes, **caractérisée en ce qu'**un cadran (7) séparant les aiguilles d'affichage (61, 62, 63) du circuit de commande, le cadran (7) étant muni d'index (71) d'affichage horaire.

8. Pièce d'horlogerie (1) selon la revendication 7, **caractérisée en ce que** le cadran (7) comporte une première série d'index (71) et une deuxième série d'index (72) correspondant à des informations chronométriques respectives pour les premier et deuxième modes de fonctionnement.

9. Pièce d'horlogerie (1) selon l'une quelconque des revendications 1 à 7, **caractérisée en ce que** l'écran (42) comporte une partie périphérique (423) ceinturant la surface de balayage (41), le circuit de commande étant configuré pour afficher des indexes (427) différents sur la partie périphérique (423) en fonction du premier ou du deuxième mode de fonctionnement.

## Patentansprüche

1. Uhrmachereistück (1), **dadurch gekennzeichnet, dass** es umfasst:
- eine Schale (2), in der ein Aufnahmevolumen (4) eingerichtet ist;
- Anzeigezeiger (61, 62, 63), die drehbar im Aufnahmevolumen (4) montiert sind;
- ein Uhrwerk, das konfiguriert ist, um die Anzeigezeiger in Drehung anzutreiben, wobei eine vollständige Drehung der Anzeigezeiger eine Abtastoberfläche (41) definiert;
- einen Anzeigeschirm (42), der in dem Aufnahmevolumen (4) unterhalb des Niveaus der Anzeigezeiger positioniert ist, wobei ein erster Teil (411) der Abtastoberfläche den Anzeigeschirm (42) überlagert und ein zweiter Teil (412) der Abtastoberfläche den Anzeigeschirm nicht überlagert, **dadurch gekennzeichnet, dass** das Uhrmachereistück weiter umfasst;
- eine Steuerschaltung, die konfiguriert ist, um sequentiell zwischen einem ersten und einem zweiten Betriebsmodus umzuschalten, wobei:
∘ ein erster Betriebsmodus, wobei die Steuerschaltung den Antrieb der Anzeigezeiger (61, 62, 63) im ersten und zweiten Teil der Abtastoberfläche steuert, um eine chronometrische Information anzuzeigen;
o ein zweiter Betriebsmodus, wobei die Steuerschaltung den Antrieb der Anzeigezeiger (61, 62, 63) nur im zweiten Teil der Abtastoberfläche steuert, um eine chronometrische Information anzuzeigen, und wobei die Steuerschaltung die Anzeige einer Information durch den Anzeigeschirm steuert.

2. Uhrmachereistück (1) nach Anspruch 1, **dadurch gekennzeichnet, dass** es weiter einen Schalter (5) umfasst, der von außerhalb der Schale (2) betätigt werden kann und mit der Steuerschaltung verknüpft ist, um eine Umschaltung zwischen dem ersten und zweiten Betriebsmodus auszulösen.

3. Uhrmachereistück (1) nach Anspruch 1 oder 2, **dadurch gekennzeichnet, dass** die Steuerschaltung konfiguriert ist, um automatisch vom ersten in den zweiten Anzeigemodus umzuschalten, sobald sie eine Anzeige auf dem Anzeigeschirm (42) steuert.

4. Uhrmachereistück (1) nach einem der vorstehenden Ansprüche, **dadurch gekennzeichnet, dass** der erste und der zweite Teil (411, 412) der Abtastoberfläche Halbscheiben sind.

5. Uhrmachereistück (1) nach einem der vorstehenden Ansprüche, **dadurch gekennzeichnet, dass** die Steuerschaltung die Anzeigezeiger überlagert und sie in Drehung antreibt, um im zweiten Betriebsmodus eine chronometrische Information anzuzeigen.

6. Uhrmachereistück (1) nach einem der vorstehenden Ansprüche, **dadurch gekennzeichnet, dass** die angezeigte chronometrische Information vom Typ Stunde, Countdown oder Chronograph ist.

7. Uhrmachereistück (1) nach einem der vorstehenden Ansprüche, **dadurch gekennzeichnet, dass** ein Zifferblatt (7) die Anzeigezeiger (61, 62, 63) von der Steuerschaltung trennt, wobei das Zifferblatt (7) mit einem Index (71) zur Zeitanzeige versehen ist.

8. Uhrmachereistück (1) nach Anspruch 7, **dadurch gekennzeichnet, dass** das Zifferblatt (7) eine erste Reihe von Indizes (71) und eine zweite Reihe von Indizes (72) beinhaltet, die den jeweiligen chronometrischen Informationen für den ersten und zweiten Betriebsmodus entsprechen.

9. Uhrmachereistück (1) nach einem der Ansprüche 1 bis 7, **dadurch gekennzeichnet, dass** der Anzeigeschirm (42) einen peripheren Teil (423) beinhaltet, der die Abtastoberfläche (41) umgibt, wobei die Steuerschaltung konfiguriert ist, um je nach dem ersten oder dem zweiten Betriebsmodus verschiedene Indizes (427) auf dem peripheren Teil (423) anzuzeigen.

## Claims

1. Timepiece (1), **characterised in that** it comprises:
- a case (2) in which a housing volume (4) is made;
- display hands (61, 62, 63) pivotably mounted in the housing volume (4);
- a movement, configured to drive the display hands in rotation, one complete rotation of the display hands defining a sweeping surface (41);
- a display screen (42) positioned in the housing volume (4) below the level of the display hands, a first part (411) of the sweeping surface being superimposed on said display screen (42) and a second part (412) of the sweeping surface not being superimposed on said display screen, **characterised in that** the timepiece further comprises:
- a control circuit configured to sequentially switch between first and second operating modes, with:
∘ a first operating mode in which the control circuit controls the driving of the display hands (61, 62, 63) in the first and second parts of the sweeping surface in order to display a piece of chronometric information;
∘ a second operating mode in which the control circuit controls the driving of the display hands (61, 62, 63) only in the second part of the sweeping surface in order to display a piece of chronometric information and in which the control circuit controls the display of a piece of information by the display screen.

2. Timepiece (1) according to claim 1, **characterised in that** it further comprises a switch (5) capable of being used from outside the case (2) and associated with the control circuit so as to trigger a switching between the first and second operating modes.

3. Timepiece (1) according to claim 1 or 2, **characterised in that** the control circuit is configured to automatically switch from the first to the second display mode as soon as it controls a display on said display screen (42).

4. Timepiece (1) according to any one of the previous claims, **characterised in that** the first and second parts (411, 412) of the sweeping surface are half-discs.

5. Timepiece (1) according to any one of the previous claims, **characterised in that** the control circuit superimposes the display hands and drives them in rotation so as to display a piece of chronometric information in said second operating mode.

6. Timepiece (1) according to any one of the previous claims, **characterised in that** the piece of chronometric information displayed is of the hour, countdown or chronograph type.

7. Timepiece (1) according to any one of the previous claims, **characterised in that** a dial (7) separates the display hands (61, 62, 63) from the control circuit, the dial (7) being provided with an index (71) for displaying time.

8. Timepiece (1) according to claim 7, **characterised in that** the dial (7) includes a first series of indexes (71) and a second series of indexes (72) corresponding to respective chronometric information for the first and second operating modes.

9. Timepiece (1) according to any one of claims 1 to 7, **characterised in that** the screen (42) includes a peripheral part (423) surrounding the sweeping surface (41), the control circuit being configured to display different indexes (427) on the peripheral part (423) according to the first or the second operating mode.
